Europäisches Patentamt

(19) European Patent Office

Office européen des brevets

(11) Publication number: **0 271 358**
A2

## (12) EUROPEAN PATENT APPLICATION

(21) Application number: 87310926.8

(51) Int. Cl.⁴: **F 16 K 15/14**

(22) Date of filing: 11.12.87

(30) Priority: 11.12.86 GB 8629616

(43) Date of publication of application:
15.06.88 Bulletin 88/24

(84) Designated Contracting States: DE FR GB IT

(71) Applicant: JOHN GUEST LIMITED
Horton Road
West Drayton Middlesex UB7 8HP (GB)

(72) Inventor: Guest, Timothy Steven
"Iona" Cannon Hill Way
Maidenhead Berkshire (GB)

(74) Representative: Bayliss, Geoffrey Cyril et al
BOULT, WADE & TENNANT 27 Furnival Street
London EC4A 1PQ (GB)

(54) Improvements in or relating to non-return valves.

(57) The disclosure relates to a non-return valve in which a two part valve body (14,15) has a throughway (11) for a fluid or gas. A spigot (25) is formed on one part (14) of the body and projects into the other part (15) to be supported centrally in the throughway and a resilient frusto-conical valve seal (27) is mounted on the spigot by a sleeve (26) formed integrally with the seal. The outer periphery of the seal bears against the wall of the throughway to prevent flow along the throughway in one direction whilst permitting flow in the opposite direction by lifting away from the wall of the troughway. The body ends may contain collets (20) for automatic locking of tubes inserted into the ends of the throughway in the valve body.

FIG. 1.

## Description

### "IMPROVEMENTS IN OR RELATING TO NON-RETURN VALVES"

This invention relates to non-return valves for use with fluids or gases.

The invention provides a non-return valve for fluid or gas comprising a valve body having a throughway, a spigot mounted centrally in the throughway and a frusto-concical resiliently flexible valve member having an up-stream inner periphery formed integrally with a sleeve engaged around the spigot and a down-stream outer periphery bearing against the encircling wall of the throughway, the arrangement being such that an excess of fluid or gas pressure on the up-stream side of the valve member over that on the down-stream side of the valve member distorts the outer periphery of the valve member away from the throughway to allow flow of fluid or gas from the up-stream side to the down-stream side thereof and an excess of fluid pressure on the down-stream side of the valve member over that of the up-stream side of the valve member acts to hold the outer periphery of the valve member in sealing engagement with the wall of the throughway.

In one construction said integral sleeve may lie within the frusto-conical valve member. Further, the spigot may have an encircling groove in which the sleeve of the valve member engages.

In any of the above arrangements means may be provided on the upstream side of the valve member to interrupt the flow of fluid to the valve member at one or more spaced locations around the valve member.

More specifically the means to interrupt the flow of fluid to the up-stream side of the valve member may comprise a plurality of vanes which extend longitudinally of the throughway from the spigot to provide between them passages for the flow of fluid to the up-stream side of the valve member.

Also in any of the above arrangements the spigot may taper in cross-section on the down-stream side of the valve member and the encircling throughway may reduce in cross-sectional area so that the passage between the throughway and spigot is of substantially constant cross-sectional area around the tapering part of the spigot.

The throughway may have tube couplings at one or both ends thereof including collets for automatically gripping and securing tubes therein.

The following is a description of a specific embodiment of the invention, reference being made to the accompanying drawings in which;

    Figure 1 is a cross-sectional view through a non-return valve;

    Figure 2 is a similar view of a modified form of the valve.

The drawings show a non-return valve suitable for use with fluids or gases comprising a valve body indicated generally at 10 having a passageway 11 extending through the valve body with a central axis indicated at 12. The valve body is formed from two injection moulded plastics components 13, 14. Component 13 has a socket 15 for receiving a tube to be secured in the valve body and a seal 16 for engaging the tube and a collet type automatic locking tube coupling 17 to hold the tube in the socket. The tube coupling is of a type described and illustrated in U.K. patent Nos:1520742, 1573757, 2007322, 2051280, 2052662, 2132295, 2131903, 8319717, 8425681, 8331191 or 8214432 or any other suitable coupling.

The other component 14 of the body has a similar socket 18 to receive a tube to be coupled therein with an annular seal 19 and a collet type automatic tube coupling 20 to hold a tube in the socket. The other end of component 14 has an inwardly stepped annular projection 21 terminating in four axially extending vanes 22 which support between them a central spigot 23. Component 13 of the valve body has an open end 24 at the opposite end thereof to the coupling 15 in which a stepped end 21 of component 14 engages with the vane 22 extending along the throughway and the spigot 23 lying along the axis 12.

The spigot 23 has a reduced diameter portion 25 adjacent the vanes 22 which is encircled by a resilient plastics sleeve 26 trapped between the vanes 22 and enlarged part of the spigot 23. At the end of the sleeve 26 adjacent the vanes 22 the sleeve 26 has an integral frusto-conical valve member 27 which diverges outwardly from the sleeve and has an outer periphery 28 which bears against the encircling wall 29 of the throughway. The valve member is so formed that the resilience of the member holds the outer periphery in sealing engagement with the throughway. By way of example, the valve member/sleeve may be formed from a silicone rubber or polyurethane plastics and may conveniently be manufactured by injection moulding.

The spigot 23 beyond the sleeve 26 tapers sharply to an end 30 and the passageway 11 of the encircling throughway converges to maintain the cross-sectional area of the passageway substantially constant over the spigot.

It will be appreciated that fluid can flow through the central passage of the valve body component 14 and between the vanes 22 to reach the valve member 27. When the fluid or gas pressure to the right-hand side of the valve member 27 exceeds that to the left-hand side of the valve member, the valve member will be distorted between the vanes 22 away from the throughway to allow fluid or gas to flow between the outer periphery of the valve member and the wall of the passage and thence into the tube secured in the socket 15. On the other hand if the pressure to the left-hand side of the valve member 27 is greater than that to the right-hand side, the pressure will act over the area of the valve member 27 to press the member to seal its outer periphery with the wall of the throughway and thus prevent fluid or gas from flowing in the direction from left to right as viewed in the drawing.

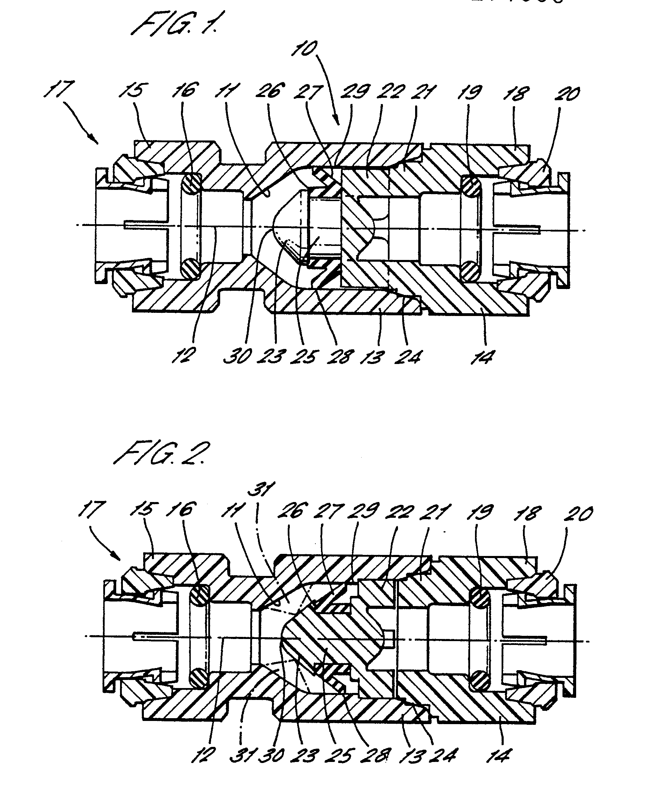

Figure 2 shows a modified construction of the non-return valve in which the valve member 27 is turned round to resist fluid pressure from the right-hand and of the valve as illustrated whilst permitting flow from right to left. In addition spigot 25 and its supporting vanes 22 are formed separately from component 14. The throughway 29 is formed with a stepped counter-bore 29a in which the ring of vanes 22 is recessed to locate the spigot 25 in the throughway and the stepped end 21 of component is weleded in the end 24 of component 13. The reducing section of passageway 11 opposite the end part 30 of spigot 25 is formed with raised ribs spaced around the throughway engaging the end of the spigot to resist deflection of the spigot along the throguhway when subjected to very high pressure on the right-hand side thereof.

## Claims

1. A non-return valve comprising a valve body having a throughway, a spigot mounted centrally in the throughway and a frusto-concial resiliently flexible valve member having an up-stream inner periphery formed integrally with a sleeve engaged around the spigot and a down-stream outer periphery bearing against the encircling wall of the throughway, the arrangement being such that an excess of fluid pressure on the up-stream side of the valve member over that on the down-stream side of the valve member distorts the outer periphery of the valve member away from the throughway to allow flow of fluid from the up-stream side to the down-stream side thereof and an excess of fluid or gas pressure on the down-stream side of the valve member over that of the up-stream side of the valve member acts to hold the outer periphery of the valve member in sealing engagement with the wall of the throughway.

2. A non-return valve as claimed in Claim 1, wherein said integral sleeve lies within the frusto-conical valve member.

3. A non-return valve as calimed in Claim 1 or Claim 2, wherein the spigot has an encircling groove in which the sleeve of the valve member engages.

4. A non-return valve as claimed in any of the preceding claims wherein means are provided on the upstream side of the valve member to interrupt the flow of fluid to the valve member at one or more spaced locations around the valve member.

5. A non-return valve as claimed in Claim 4, wherein means to interrupt the flow of fluid to the up-stream side of the valve member comprise a plurality of vanes which extend longitudinally of the throughway from the spigot to provide between them passages for the flow of fluid or gas to the up-stream side of the valve member.

6. A non-return valve as claimed in any of the preceding claims wherein the spigot tapers in cross-section on the down-stream side of the valve member and the encircling throughway reduces in cross-sectional area so that the passage between the throughway and spigot is of substantially constant cross-sectional area around the tapering part of the spigot.

7. A non-return valve member as claimed in any of the preceding claims wherein the throughway has tube couplings at one or both ends thereof including collets for automatically gripping and securing the tubes therein.

FIG.1.

FIG.2.